# EUROPÄISCHE PATENTSCHRIFT

(11) **EP 0 677 836 B1**
(45) Veröffentlichungstag und Bekanntmachung des Hinweises auf die Patenterteilung: **27.10.1999**
(21) Anmeldenummer: 95200873.8
(22) Anmeldetag: 06.04.1995
(51) Int. Cl.: G10L 5/06, G10L 7/08, G10L 9/06, G10L 9/18

(54) **Verfahren zum Ermitteln einer Folge von Wörtern und Anordnung zur Durchführung des Verfahrens**
Process for ascertaining a series of words and arrangement for this process
Procédé pour rechercher une suite de mots et arrangement pour la réalisation du procédé

(30) Priorität: 14.04.1994 DE 4412745
(43) Veröffentlichungstag der Anmeldung: 18.10.1995
(73) Patentinhaber: Philips Patentverwaltung GmbH, 22335 Hamburg (DE); Koninklijke Philips Electronics N.V., 5621 BA Eindhoven (NL)
(72) Erfinder: Steinbiss, Volker, Dr., D-22335 Hamburg (DE); Tran, Bach-Hieb, D-22335 Hamburg (DE); Ney, Hermann, Dr., D-22335 Hamburg (DE)
(74) Vertreter: Volmer, Georg, Dipl.-Ing.

(56) Entgegenhaltungen:
- EP-A- 0 285 221
- EP-A- 0 285 222
- EP-A- 0 533 260

## Beschreibung

Die Erfindung betrifft ein Verfahren zum Ermitteln einer Folge von Wörtern eines vorgegebenen Vokabulars aus einem Sprachsignal mit folgenden Schritten:
zu wiederholten Zeitpunkten wird das Sprachsignal abgetastet, um eine Folge von Testsignalen zu erzeugen;
es wird ein signalweiser Vergleich zwischen den Testsignalen und verschiedenen Folgen von Referenzsignalen mit Erzeugung von Bewertungswerten durchgeführt, wobei jede Folge von Referenzsignalen zu einem vorgegebenen Satz von Folgen von Referenzsignalen gehört und ein Wort des Vokabulars darstellt und der Satz von Folgen von Referenzsignalen einen Baum mit einer Wurzel bildet, worin jeder Baumzweig eine Anzahl Referenzsignale aufweist und einem Sprachelement zugeordnet ist und Vokabularwörter bestimmten Zweigknoten und Zweigenden zugeordnet sind;
für jedes beendete Wort wird ein Wortergebnis abgeleitet, das einen Gesamt-Bewertungswert umfaßt, und der Vergleich mit Erzeugung von Bewertungswerten wird, beginnend mit einem neuen Bewertungswert entsprechend dem Gesamt-Be wertungswert des beendeten Wortes als Vorgängerwort, für nachfolgende Testsignale mit dem Anfang von Folgen von Referenzsignalen fortgesetzt, solange der Bewertungswert kleiner als ein vorgegebener Schwellenwert ist, wobei der Gesamt-Bewertungswert des beendeten Wortes aus dem Bewertungswert am Ende dieses Wortes und einem Sprachmodellwert abgeleitet ist, der einer Kombination des beendeten Wortes und einer Folge vorgegebener Länge von beendeten Vorgängerwörtern zugeordnet ist;
wenigstens eine Folge von Wörtern wird auf der Basis der Gesamt-Bewertungswerte ermittelt,
sowie eine Anordnung zur Durchführung dieses Verfahrens.

Ein derartiges Verfahren ist bekannt aus der EP 0 533 260 und dient zur Erkennung zusammenhängend gesprochener Sprache mit großem Vokabular. Da bei jedem erreichten Wortende die Vergleiche mit der Wurzel des Vokabularbaums erneut beginnen, sind sehr viele Zustände innerhalb des Baums aktiv. Dies wird deutlicher, wenn man jeden neu mit der Baumwurzel beginnenden Vergleich als Kopie des Vokabularbaums vorstellt. Dies gilt umso mehr, wenn bei der Verwendung komplexer Sprachmodelle für gleichzeitig endende Wörter getrennte Baumkopien aufgebaut werden. Jeder voneinander unterschiedliche Weg durch jeden Baum stellt dabei eine momentane Hypothese dar. Um die Anzahl aktiver Hypothesen zu verringern, werden die Bewertungswerte der Hypothesen mit einem Schwellenwert verglichen, der vorzugsweise durch den optimalen Bewertungswert zum momentanen Zeitpunkt, erhöht um einen bestimmten Wertebereich, gebildet wird, und alle Hypothesen mit einem Bewertungswert oberhalb dieses Schwellenwertes werden nicht weiterverfolgt.

Um den Suchraum, d.h. die Anzahl aktiver Hypothesen, weiter zu verringern, wird ferner ein Sprachmodell verwendet, das die Wahrscheinlichkeiten von Wortfolgen oder zumindest die Einzelwahrscheinlichkeiten der Wörter für sich berücksichtigt. Wenn jedoch das Vokabular als Baum aufgebaut ist, kann der Sprachmodellwert erst nach Beendigung eines Wortes ermittelt werden. Die Fortsetzung einer Hypothese nach einem Wortende erfolgt dann mit einem sprunghaft erhöhten Bewertungswert, so daß der Schwellenwert, mit dem die Bewertungswerte verglichen werden, genügend hoch gewählt werden muß. Dadurch bleiben innerhalb der einzelnen Wörter bzw. der Baumkopien jedoch viele Hypothesen aktiv, die erst nach Erreichen eines Wortendes durch Hinzufügen des Sprachmodellwertes den dann gültigen Schwellenwert überschreiten und damit beendet werden.

Aufgabe der Erfindung ist es daher, ein Verfahren der eingangs genannten Art anzugeben, das die Verwendung eines günstigeren Schwellenwertes für die Bewertungswerte und damit eine Verringerung der Anzahl aktiver Hypothesen ermöglicht, ohne die Erkennungssicherheit nennenswert zu verringern.

Diese Aufgabe wird erfindungsgemäß dadurch gelöst, daß bei der Fortsetzung der Vergleiche nach einem Wortende der Bewertungswert wenigstens bei der Baumwurzel um einen Korrekturwert erhöht wird und bei Erreichen jedes Wortendes dieser Korrekturwert vom Bewertungswert an diesem Wortende subtrahiert und der Sprachmodellwert addiert wird, um den Gesamt-Bewertungswert zu ergeben.

Kerngedanke der Erfindung ist es, den Sprachmodellwert, der erst am Ende eines Wortes bestimmt werden kann, wenigstens zum Teil bereits am Wortanfang zu berücksichtigen, so daß die Bewertungswerte der einzelnen Hypothesen an Wortgrenzen keine großen Sprünge machen und insgesamt die Bewertungswerte der Hypothesen zu jedem Zeitpunkt in vernünftig vergleichbarer Größe vorliegen. Dadurch kann dann der Schwellenwert, mit dem die Bewertungswerte der einzelnen Hypothesen verglichen werden, bzw. der Bereich zwischen dem optimalen Bewertungswert und dem Schwellenwert kleiner gehalten werden, so daß ungünstige Hypothesen früher beendet werden können.

Der Korrekturwert sollte höchstens so groß sein wie der Sprachmodellwert des günstigsten Wortes, das der betreffenden Stelle im Baum folgen kann, an dem der Korrekturwert addiert wurde. Dadurch kann bei Verwendung nur eines einzigen Korrekturwertes an der Baumwurzel dieser Korrekturwert nur klein sein. In diesem Falle werden zum Teil doch noch Hypothesen weiterverfolgt, die später in Wörtern enden, die eine geringe Wahrscheinlichkeit haben. Aus diesem Grunde bringt die Berücksichtigung eines Korrekturwertes nur am Anfang jeder Baumkopie einen begrenzten Vorteil. Eine Ausgestaltung des erfindungsgemäßen Verfahrens ist daher dadurch gekennzeichnet, daß außerdem bei wenigstens einigen der Baumwurzel folgenden Baumknoten der momentane Bewertungswert um einen diesem Baumknoten zugeordneten Korrekturwert erhöht wird und bei Erreichen eines Wortendes die Summe der Korrekturwerte aller bis zum betreffenden Wortende durchlaufenen Baumknoten subtrahiert und der Sprachmodellwert addiert wird, um den Gesamt-Bewertungswert zu ergeben. Die beste Annäherung an den tatsächlichen Sprachmodellwert wird selbstverständlich erhalten, wenn bei jedem Baumknoten ein entsprechender Korrekturwert addiert wird, auf dem nur Wörter mit größerem Sprachmodellwert folgen, jedoch stellt dies einen großen Verarbeitungsaufwand dar, der die Einsparung durch eine gute Verringerung der Anzahl ungünstiger Hypothesen übersteigen kann. Ein guter Kompromiß besteht darin, daß beispielsweise nur bis zum zweiten oder bis zum dritten Baumknoten nach der Baumwurzel Korrekturwerte addiert werden.

Bei der Verwendung mehrerer Korrekturwerte an aufeinanderfolgenden Baumknoten muß berücksichtigt werden, daß die dadurch entstehende Erhöhung des Bewertungswertes nicht größer wird als der Sprachmodellwert des bezüglich des Sprachmodells günstigsten Worts, das nach dieser Folge von Baumknoten enden kann. Eine weitere Ausgestaltung des erfindungsgemäßen Verfahrens ist daher dadurch gekennzeichnet, daß die Summe der Korrekturwerte aller Baumknoten zwischen der Baumwurzel und jedem Wort den Sprachmodellwert für dieses Wort nicht übersteigt.

Der Korrekturwert bzw. die Korrekturwerte können auf verschiedene Weise bestimmt werden. Eine besonders gute Annäherung an den korrekten Sprachmodellwert wird nach einer weiteren Ausgestaltung dadurch erhalten, daß der bzw. jeder Korrekturwert von dem Minimum der Sprachmodellwerte abgeleitet ist, die sich für alle dem betreffenden Baumknoten folgenden Wörter ergeben. Für jedes optimale Wort, das von einem bestimmten Punkt im Baum erreicht werden kann, wird dann gerade bei Erreichen dieses Wortes der zugehörige Sprachmodellwert addiert. Allerdings muß bei dieser Lösung jeder Korrekturwert für jede Baumkopie gesondert ermittelt werden.

Eine andere Möglichkeit besteht darin, daß die den Baumknoten zugeordneten Korrekturwerte fest vorgegebene Werte sind, die vorzugsweise für jeden Baumknoten aus den diesem Baumknoten folgenden Wörtern und, bei einem n-Gram-Sprachmodell mit n>1, aus den optimalen Vorgängerwörtern entsprechend dem verwendeten Sprachmodell ermittelt sind. In diesem Falle können die Korrekturwerte fest gespeichert sein, beispielsweise sogar in dem Speicher für die Referenzsignale oder in einem dazu parallel angesteuerten Speicher. Da der Aufwand für die Ermittlung der optimalen Korrekturwerte nur einmal vor Beginn des erfindungsgemäßen Verfahrens anfällt, können diese Korrekturwerte auch mit größerem Aufwand möglichst gut ermittelt werden. Allerdings werden bei Verwendung solcher fest zugeordneter Korrekturwerte die tatsächlichen Vorgängerwörter bei den einzelnen Baumkopien nicht berücksichtigt. Eine weitere Vereinfachung dieser Ausgestaltung kann auch darin bestehen, daß die Korrekturwerte von den einzelnen Unigram-Sprachmodellwerten der einzelnen Wörter abgeleitet sind.

Schließlich kann auch eine Kombination der beiden unterschiedlichen Möglichkeiten für die Bestimmung der Korrekturwerte verwendet werden, indem die Korrekturwerte an Baumknoten nur für bestimmte vorgegebene Wörter des Vokabulars abhängig von diesen Wörtern bestimmt werden und für alle anderen Wörter des Vokabulars vorgebenene, den Baumknoten fest zugeordnete Korrekturwerte verwendet werden. Es hat sich nämlich herausgestellt, daß bestimmte Vorgängerwörter die Sprachmodellwerte besonders stark beeinflussen, während bei den übrigen Vorgängerwörtern die daraus entstehenden Sprachmodellwerte ähnlich sind. Dadurch werden auf die zuletzt angegebene Weise bereits recht günstige Korrekturwerte erhalten.

Ein natürliches Sprachsignal enthält stets Sprachpausen, auch wenn diese manchmal nur sehr kurz sind. Um solche Sprachpausen zu berücksichtigen, ist es bekannt, daß der Satz von Folgen von Referenzsignalen mindestens ein Pausen-Referenzsignal umfaßt, das einer Sprachpause zugeordnet ist. In diesem Falle ist es zweckmäßig, daß nach einem Wortende beim Vergleich eines Testsignals mit einem Pausen-Referenzsignal kein Korrekturwert addiert wird. Auf diese Weise werden Sprachpausen quasi bevorzugt, und es wird damit verhindert, daß sich die Anzahl der Hypothesen sprunghaft vergrößert, da eine Sprachpause unterschiedlich zu allen Sprachelementen des Vokabularbaums ist und somit geringe Unterschiede der Bewertungswerte der einzelnen Hypothesen untereinander auftreten, so daß es praktisch nicht möglich ist, viele Hypothesen als ungünstig zu erkennen und diese zu beenden.

Eine erfindungsgemäße Anordnung zum Durchführen des vorstehend angegebenen Verfahrens mit Mitteln zum Aufnehmen eines akustischen Sprachsignals und zum Erzeugen einer Folge von Testsignalen daraus,
Mitteln zum Speichern von Folgen von Referenzsignalen, die Wörtern eines Vokabulars entsprechen,
Mitteln zum Speichern von Sprachmodellwerten,
ersten Mitteln zum Vergleichen der Folge von Testsignalen mit Folgen von Referenzsignalen und zum Erzeugen von Bewertungswerten und Gesamt-Bewertungswerten,
zweiten Mitteln zum Vergleichen der Bewertungswerte mit einem Schwellenwert und zum Steuern der ersten Mittel zum Vergleichen,
Mitteln, die wenigstens von den ersten Mitteln zum Vergleichen gesteuert sind, zum Abgeben wenigstens einer Folge von Wörtern, ist gekennzeichnet durch Mittel zum Liefern von Korrekturwerten an die ersten Mittel zum Vergleichen.

Ausführungsbeispiele der Erfindung werden nachstehend anhand der Zeichnung näher erläutert. Es zeigen:
- Fig. 1: schematisch ein Diagramm mit zwei gegeneinander verschobenen Baumkopien,
- Fig. 2: ein Blockschaltbild einer erfindungsgemäßen Anordnung.

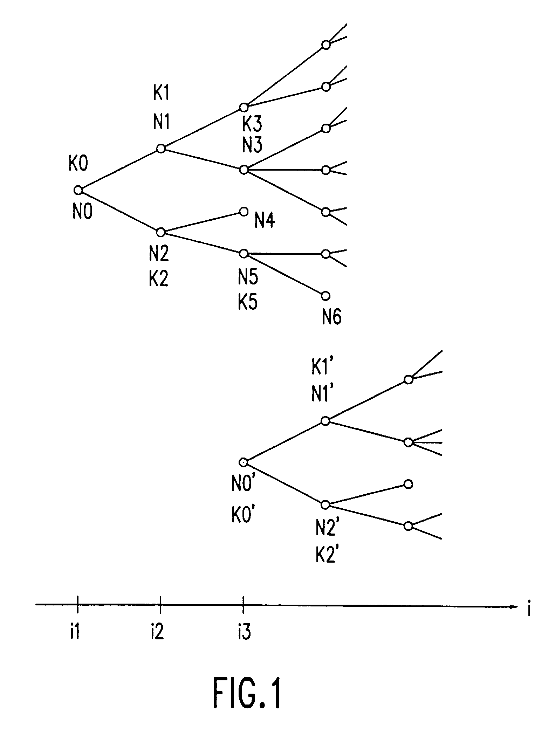

Bei der folgenden Erläuterung wird davon ausgegangen, daß das Vokabular als Baum aufgebaut ist. Ein solcher Baum besteht aus Knoten und diese Knoten verbindenden Kanten, wie in Fig. 1 angedeutet ist, wobei zunächst nur der obere Baum betrachtet wird, der tatsächlich nur den Anfang eines Vokabularbaums darstellt. Von dem Knoten N0, der die Baumwurzel darstellt, gehen zwei Kanten zu Knoten N1 und N2 aus, die wiederum zu weiteren Knoten verzweigen, von denen hier die Knoten N3 bis N5 bezeichnet sind. Jede von einem Knoten zum nächsten Knoten verlaufende Kante stellt ein Sprachelement dar, das durch eine Anzahl aufeinanderfolgender Referenzsignale repräsentiert wird. Von jedem Knoten gehen wenigstens zwei Kanten aus, vom Knoten N3 sogar drei Kanten, d.h. auf jedes Sprachelement, das an einem Knoten endet, können mehrere verschiedene Sprachelemente folgen. Vom Knoten N4 gehen jedoch keine Kanten aus, d.h. dieser Knoten N4 stellt ein Wortende dar. Andere Wortenden können jedoch auch in Knoten liegen, von denen weitere Kanten ausgehen. Dabei sei bemerkt, daß der Vokabularbaum hier sehr vereinfacht dargestellt ist und ein Vokabularbaum für reale Sprache sehr viel mehr Knoten in jeder Ebene und entsprechend mehr davon ausgehende Kanten hat.

Eine Folge von Testsignalen, die aus einem Sprachsignal gewonnen wurde, wird nun mit im wesentlichen aufeinanderfolgenden Referenzsignalen verglichen. In Fig. 1 ist nun eine zeitliche Folge von Testsignalen i angenommen, wobei einige Testsignale näher gekennzeichnet sind. Beim Testsignal i1 wird angenommen, daß vorher ein Wortende erreicht worden war und nun der Vergleich mit den ersten Referenzsignalen des Vokabularbaums wieder begonnen wird. Dies kann schematisch so betrachtet werden, als ob in dem in Fig. 1 oben dargestellten Baum die Kanten in der i-Achse parallel durchlaufen werden. Dies gilt nicht ganz genau, da auf einzelnen Kanten auch einzelne Referenzsignale mehreren aufeinanderfolgenden Testsignalen zugeordnet werden können, ebenso wie bei aufeinanderfolgenden Testsignalen auch einzelne Referenzsignale innerhalb der Folge der Referenzsignale auf einer Kante übersprungen werden können, jedoch werden diese Fälle der Einfachheit halber für die folgende Betrachtung nicht näher berücksichtigt. Die auf das Testsignal i1 folgenden Testsignale werden also mit den Referenzsignalen der beiden Kanten, die von der Baumwurzel N0 ausgehen, verglichen, und mit dem Testsignal i2 sind diese beiden Folgen von Referenzsignalen, die durch die Kanten dargestellt sind, durch die Knoten N1 und N2 abgeschlossen, und die folgenden Testsignale werden mit den Folgen von Referenzsignalen entsprechend den von Knoten N1 und N2 ausgehenden Kanten verglichen.

Mit dem Testsignal i3 ist u.a. das Wortende entsprechend dem Knoten N4 erreicht, und der zugehörige Bewertungswert ist auf eine bestimmte Größe angewachsen, die durch die vorhergehenden Wörter und die Summe der Vergleichsergebnisse der Testsignale i1 bis i3 und der Referenzsignale zwischen der Baumwurzel N0 und dem Knoten N4 bestimmt ist. Bevor nun nach dem Wortende beim Knoten N4 der Vergleich mit dem Anfang des Vokabularbaums erneut gestartet wird, was durch den Anfang des unteren Baums in Fig. 1 angedeutet ist, wird zu dem Bewertungswert am Wortende ein Sprachmodellwert addiert, der von diesem Wort und, abhängig vom verwendeten Sprachmodell, einer Anzahl Vorgängerwörter abhängt. Dadurch wird ein Gesamt-Bewertungswert am Ende dieses Wortes gebildet, und der erneute Start der Vergleiche mit dem Anfang des Vokabularbaums beginnt mit einem Bewertungswert gleich diesem Gesamt-Bewertungswert.

Gleichzeitig werden aber mit den auf i3 folgenden Testsignalen die Vergleiche mit dem oberen Baum fortgeführt, nämlich mit den Referenzsignalen entsprechend den Kanten, die von den Knoten N3, N5 usw. ausgehen. Wenn nun beispielsweise angenommen wird, daß an den Knoten N4 und N5 etwa gleiche Bewertungswerte erreicht wurden, werden die Bewertungswerte auf den vom Knoten N5 ausgehenden Kanten zumindest zunächst wesentlich kleiner sein als auf den von der Baumwurzel N0' ausgehenden Kanten des neuen Baums, da bei letzterem ein Sprachmodellwert addiert wurde. Wenn nun verhindert werden soll, daß die von dem Baumknoten N0' ausgehenden Hypothesen vorzeitig beendet werden, weil sie den momentanen Schwellenwert überschreiten, muß dieser Schwellenwert, der sich von dem besten Bewertungswert zu jedem Zeitpunkt ableitet, genügend hoch über diesem besten Bewertungswert liegen, d.h. es muß ein großer Bereich von Bewertungswerten erlaubt werden. Dadurch werden aber in dem oberen Baum noch viele Hypothesen weitergeführt, die wesentlich schlechter sind als die beste Hypothese in diesem Baum, wodurch der Suchraum, d.h. die Gesamtzahl aktiver Hypothesen, unnötig groß wird.

Um diesen Effekt zu vermeiden, werden während des Vergleichs der Testsignale mit den Referenzsignalen entsprechend den einzelnen Kanten an den Knoten, d.h. an den Übergängen von einem Sprachelement zu den folgenden, Korrekturwerte addiert. Dabei hat der Korrekturwert K0, der an der Baumwurzel N0 addiert wird, eine etwas andere Wirkung als die anderen Korrekturwerte, wie später erläutert wird. Beim Knoten N1 wird ein Korrekturwert K1 zu dem dort erreichten Bewertungswert addiert, und beim Knoten N2 ein Korrekturwert K2. Entsprechend wird bei den Knoten N3 und N5 ein Korrekturwert K3 bzw. K5 addiert. Beim Knoten N4, der ein Wortende darstellt, wird kein Korrekturwert addiert, sondern hier wird umgekehrt die Summe aller bisher auf dem Pfad zu diesem Wortende addierten Korrekturwerte wieder subtrahiert, und dann wird der korrekte Sprachmodellwert addiert. Beim Knoten N4 wird also zunächst die Summe K0+K2 subtrahiert. Nach Addition des richtigen Sprachmodellwerts ist also der ursprüngliche Bewertungswert bzw. Gesamt-Bewertungswert an dieser Stelle wieder erreicht, und die Baumwurzel N0' wird mit demselben Bewertungswert begonnen wie ohne Verwendung von Korrekturwerten. Gleichzeitig sind jedoch bei den beispielsweise vom Knoten N5 ausgehenden Vergleiche die Bewertungswerte um die Summe K0+K2+K5 erhöht und liegen damit in der gleichen Größenordnung wie die Bewertungswerte, die von der Baumwurzel N0' ausgehen. Damit sind diese Bewertungswerte besser vergleichbar, und der Schwellenwert, bei dessen Überschreiten durch den Bewertungswert eine Hypothese beendet wird, kann näher bei dem optimalen Bewertungswert zu diesem Zeitpunkt gewählt werden. Es ist unmittelbar erkennbar, daß dadurch die Anzahl aktiver Hypothesen verringert wird, ohne daß die Gefahr größer wird, daß eine Hypothese beendet wird, die sich später im weiteren Verlauf des Sprachsignals als besser herausgestellt hätte.

Aus der vorstehenden Beschreibung ist auch zu erkennen, daß die Summe der Korrekturwerte, die bei allen Knoten auf dem Wege bis zu einem Wortende addiert werden, nicht größer sein sollten als das Sprachmodell dieses Wortes. So sollte die Summe K0+K2 nicht größer sein als der Sprachmodellwert des Wortes, das am Knoten N4 endet. Entsprechend sollte die Summe K0+K2+K5 nicht größer sein als das Wort, das beim Knoten N6 endet, wenn hier also ein Wortende angenommen wird. Grundsätzlich gilt dies auch bei Wortenden, die innerhalb des Baumes an einem Knoten mit ausgehenden Kanten enden, denn es gibt viele Wörter, die gleichzeitig den Anfang eines längeren Wortes darstellen.

Die Wirkung des Korrekturwertes K0 an der Baumwurzel N0 besteht darin, daß es mindestens ein Referenzsignal gibt, das nicht Bestandteil des Vokabularbaums ist, sondern das einer Sprachpause zugeordnet ist. Wenn in einem Sprachsignal am Ende eines Wortes eine solche Sprachpause auftritt, wird das daraus abgeleitete Testsignal eine gute Übereinstimmung mit dem Pausen-Referenzsignal zeigen, dagegen nicht mit den ersten auf die Baumwurzel folgenden Referenzsignalen, bei denen also ungünstige Bewertungswerte entstehen, die durch den vorher addierten Korrekturwert K0 noch weiter ungünstig werden, so daß die entsprechenden Hypothesen sehr schnell beendet werden. Für das Pausen-Referenzsignal wird nämlich kein Korrekturwert addiert, so daß der zugehörige Bewertungswert relativ günstig bleibt.

Um die Größe der Korrekturwerte möglichst optimal zu bestimmen, kann auf folgende Weise vorgegangen werden. Zunächst wird für jeden Knoten im Baum, der einem Wortende zugeordnet ist, der minimale Sprachmodellwert für alle von diesem Knoten aus zu erreichenden Wortenden ermittelt. Bei Knoten im Baum, die nur ein Wortende darstellen und von denen keine weiteren Kanten ausgehen, ist dies der Sprachmodellwert dieses endenden Wortes selbst, jedoch bei Knoten im Inneren des Baums ist dies nicht notwendig der Fall, denn der Sprachmodellwert an einem solchen Knoten innerhalb des Baums kann größer sein als der Sprachmodellwert für mögliche Wortverlängerungen. Wenn man nun zu einem Wortende über die vorhergehende Folge von Knoten von der Baumwurzel beginnend entlang läuft, werden diese den Knoten zugeordneten Werte größer oder bleiben gleich. Der Baumwurzel wird nun das Minimum aller irgendeinem Knoten zugeordneten Werte als Korrekturwert zugeordnet, und jeder Knoten erhält nun als Korrekturwert die Differenz seines zugehörigen Wertes zum vorhergehenden Knoten. Damit ist die Summe aller Korrekturwerte auf jedem Weg zu einem Wortende nicht größer als der Sprachmodellwert für dieses Wortende.

Wenn bei der Abschätzung der Sprachmodellwerte für jeden Knoten im Baum, an dem ein Wortende vorhanden ist, abhängig vom verwendeten Sprachmodell die tatsächliche Folge von Vorgängerwörtern berücksichtigt wird, müssen die Korrekturwerte ständig neu berechnet werden. Es ist jedoch auch möglich, feste Korrekturwerte zu verwenden, wobei für jedes Wortende innerhalb des Baums vom optimalen Vorgängerwort bzw. der optimalen Folge von Vorgängerwörtern ausgegangen wird, unabhängig davon, welches in jedem Moment die tatsächlichen Vorgängerwörter sind. Dadurch ergeben sich normalerweise kleinere Korrekturwerte, so daß der Suchraum nicht optimal verkleinert werden kann, jedoch können diese Korrekturwerte vorher bestimmt und den einzelnen Knoten des Vokabularbaums fest zugeordnet werden. Dadurch ist für diese Korrekturwerte während des Erkennungsvorgangs kein Rechenaufwand erforderlich. Es ist auch möglich, für die Ermittlung der Korrekturwerte abhängig von Vorgängerwörtern ein einfacheres Sprachmodell zu verwenden als dasjenige, aus dem dann die richtigen Sprachmodellwerte entnommen werden. Im Grenzfall kann jedem Wortende der Unigram-Sprachmodellwert zugeordnet werden. Es ist auch möglich, nur für bestimmte, festgelegte Vorgängerwörter die Korrekturwerte abhängig von diesen Vorgängerwörtern zu ermitteln, während für die übrigen Wörter feste, vorherbestimmte Werte verwendet werden. Die meisten Wörter ergeben nämlich sehr ähnliche Sprachmodellwerte, während nur wenige bestimmte Wörter davon wesentlich abweichende Sprachmodellwerte ergeben. Eine weitere Vereinfachung besteht auch darin, daß nicht allen Knoten Korrekturwerte zugeordnet werden, sondern nur den ersten, unmittelbar auf die Baumwurzel folgenden Knoten oder zusätzlich noch den darauf folgenden Knoten, da den weiter entfernt liegenden Knoten nur kleine Korrekturwerte zugeordnet würden.

Die einfachste Möglichkeit besteht darin, nur der Baumwurzel einen Korrekturwert zuzuordnen, der jedoch dann lediglich die, wie beschrieben, für Sprachpausen geltende Wirkung hat.

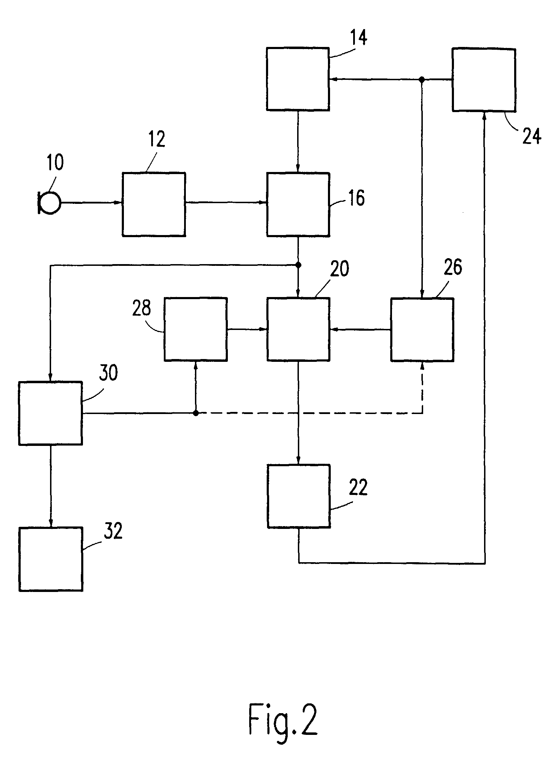

Die in Fig. 2 als Blockschaltbild dargestellte Anordnung gleicht in wesentlichen Teilen bekannten Anordnungen. Über ein Mikrofon 10 wird ein akustisches Sprachsignal aufgenommen und in ein elektrisches Signal umgewandelt und im Block 12 vorzugsweise zu regelmäßigen Zeitpunkten abgetastet und in eine Folge von Testsignalen umgesetzt. Jedes Testsignal charakterisiert einen Zeitabschnitt des Sprachsignals, beispielsweise einen Abschnitt von 10 ms Dauer, über eine Vielzahl von Parametern, und im Block 16 werden diese Testsignale mit Referenzsignalen aus einem Speicher 14 verglichen und Abstandswerte bestimmt. Dieser Vergleich erfolgt üblicherweise nach der Methode der dynamischen Programmierung. In dem Speicher 14 sind die Referenzwerte als Folgen von jeweils einer Anzahl Referenzwerten enthalten, wobei jede Folge einen Sprachlaut, beispielsweise einem Phonem entspricht. Die gespeicherten Referenzsignale werden von einer Adressieranordnung 24 aufgerufen, um sie dem Vergleicher 16 zuzuführen.

Im Block 20 werden die Vergleichsergebnisse verarbeitet, insbesondere über Folgen von Referenzsignalen aufsummiert, und die Ergebnisse werden zumindest vorübergehend zwischengespeichert. Ferner werden an den Enden der Folgen von Referenzsignalen, die also einem Knoten im Vokabularbaum entsprechen, Korrekturwerte addiert, die von einer Anordnung 26 geliefert werden, sofern der betreffende Knoten nicht nur ein Wortende darstellt. Die Korrekturwerte werden aus der Angabe des betreffenden Knotens, die aus der Adresse von der Adressieranordnung 24 ermittelt wird, bestimmt, und zwar im einfachsten Falle bei festen Korrekturwerten aus einem Speicher ausgelesen oder mit Hilfe der Vorgängerwörter, die von einem Wortergebnisspeicher 30 geliefert werden, berechnet. Der Wortergebnisspeicher 30 empfängt bei jedem erreichten Wortende, d.h. wenn das momentan aus dem Speicher 14 ausgelesene Referenzsignal das letzte eines Wortes ist, die zu diesem Wort gehörigen Angaben wie insbesondere die Wortidentität sowie Hinweise auf Vorgängerwörter. Außerdem wird bei jedem Wortende im Block 20 die Summe der vorher aufaddierten Korrekturwerte subtrahiert und ein Sprachmodellwert addiert, der einem Sprachmodellspeicher 28 entnommen wird. Dieser wird ebenfalls durch die Vorgängerwörter aus dem Wortergebnisspeicher 30 angesteuert.

Die im Block 20 aus den Vergleichen der Testsignale mit Referenzsignalen ermittelten Daten werden einem weiteren Vergleicher 22 zugeführt, wo der Bewertungswert für jede Folge von Referenzsignalen mit einem Schwellenwert verglichen wird, der vorzugsweise aus dem minimalen Bewertungswert bei jedem Testsignal abgeleitet ist. Nur wenn der Bewertungswert günstiger ist als der Schwellenwert, wird die Adressieranordnung 24 angesteuert, um die nächsten Referenzsignale auszulesen, die mit dem folgenden Testsignal verglichen werden sollen.

An den Wortspeicher 30 kann sich noch eine weitere, hier nicht dargestellte Verarbeitungsanordnung anschließen, die bei mehreren erzeugten Wortfolgen im Wortspeicher 30 vorzugsweise die Wortfolge mit größter Wahrscheinlichkeit auswählt und diese dann einer Ausgabeanordnung 32, wie einem Bildschirm oder einen Drucker, zuführt.

Bei der bisherigen Erläuterung wurde davon ausgegangen, daß die Bewertungswerte durch die Summe von Vergleichsergebnissen angegeben werden, die insbesondere die negativen Logarithmen der Zustandswahrscheinlichkeiten bei den einzelnen Vergleichen angeben, und entsprechend werden auch Korrekturwerte und Sprachmodellwerte addiert. Bei anderer Darstellung der Vergleichsergebnisse, beispielsweise bei Angabe der direkten Wahrscheinlichkeitswerte, müßten die entsprechenden Werte multipliziert werden. Dies berührt jedoch nicht das Prinzip der Erfindung.

## Patentansprüche

1. Verfahren zum Ermitteln einer Folge von Wörtern eines vorgegebenen Vokabulars aus einem Sprachsignal mit folgenden Schritten:
zu wiederholten Zeitpunkten wird das Sprachsignal abgetastet, um eine Folge von Testsignalen zu erzeugen;
es wird ein signalweiser Vergleich zwischen den Testsignalen und verschiedenen Folgen von Referenzsignalen mit Erzeugung von Bewertungswerten durchgeführt, wobei jede Folge von Referenzsignalen zu einem vorgegebenen Satz von Folgen von Referenzsignalen gehört und ein Wort des Vokabulars darstellt und der Satz von Folgen von Referenzsignalen einen Baum mit einer Wurzel bildet, worin jeder Baumzweig eine Anzahl Referenzsignale aufweist und einem Sprachelement zugeordnet ist und Vokabularwörter bestimmten Zweigknoten und Zweigenden zugeordnet sind;
für jedes beendete Wort wird ein Wortergebnis abgeleitet, das einen Gesamt-Bewertungswert umfaßt, und der Vergleich mit Erzeugung von Bewertungswerten wird, beginnend mit einem neuen Bewertungswert entsprechend dem Gesamt-Bewertungswert des beendeten Wortes als Vorgängerwort, für nachfolgende Testsignale mit dem Anfang von Folgen von Referenzsignalen fortgesetzt, solange der Bewertungswert kleiner als ein vorgegebener Schwellenwert ist, wobei der Gesamt-Bewertungswert des beendeten Wortes aus dem Bewertungswert am Ende dieses Wortes und einem Sprachmodellwert abgeleitet ist, der einer Kombination des beendeten Wortes und einer Folge vorgegebener Länge von beendeten Vorgängerwörtern zugeordnet ist;
wenigstens eine Folge von Wörtern wird auf der Basis der Gesamt-Bewertungswerte ermittelt,
dadurch gekennzeichnet, daß bei der Fortsetzung der Vergleiche nach einem Wortende der Bewertungswert wenigstens bei der Baumwurzel um einen Korrekturwert erhöht wird und bei Erreichen jedes Wortendes dieser Korrekturwert vom Bewertungswert an diesem Wortende subtrahiert und der Sprachmodellwert addiert wird, um den Gesamt-Bewertungswert zu ergeben.

2. Verfahren nach Anspruch 1,
dadurch gekennzeichnet, daß außerdem bei wenigstens einigen der Baumwurzel folgenden Baumknoten der momentane Bewertungswert um einen diesem Baumknoten zugeordneten Korrekturwert erhöht wird und bei Erreichen eines Wortendes die Summe der Korrekturwerte aller bis zum betreffenden Wortende durchlaufenen Baumknoten subtrahiert und der Sprachmodellwert addiert wird, um den Gesamt-Bewertungswert zu ergeben.

3. Verfahren nach Anspruch 2,
dadurch gekennzeichnet, daß die Summe der Korrekturwerte aller Baumknoten zwischen der Baumwurzel und jedem Wortende den Sprachmodellwert für dieses Wort nicht übersteigt.

4. Verfahren nach Anspruch 2 oder 3,
dadurch gekennzeichnet, daß der bzw. jeder Korrekturwert von dem Minimum der Sprachmodellwerte abgeleitet ist, die sich für alle dem betreffenden Baumknoten folgenden Wörter ergeben.

5. Verfahren nach Anspruch 2 oder 3,
dadurch gekennzeichnet, daß die den Baumknoten zugeordneten Korrekturwerte fest vorgegebene Werte sind, die vorzugsweise für jeden Baumknoten aus den diesem Baumknoten folgenden Wörtern und, bei einem n-Gram-Sprach-modell mit n>1, aus den optimalen Vorgängerwörtern entsprechend dem verwendeten Sprachmodell ermittelt sind.

6. Verfahren nach Anspruch 2 oder 3,
dadurch gekennzeichnet, daß die Korrekturwerte an Baumknoten nur für bestimmte vorgegebene Wörter des Vokabulars abhängig von diesen Wörtern bestimmt werden und für alle anderen Wörter des Vokabulars vorgebenene, den Baumknoten fest zugeordnete Korrekturwerte verwendet werden.

7. Verfahren nach einem der vorhergehenden Ansprüche, wobei der Satz von Folgen von Referenzsignalen mindestens ein Pausen-Referenzsignal umfaßt, das einer Sprachpause zugeordnet ist,
dadurch gekennzeichnet, daß nach einem Wortende beim Vergleich eines Testsignals mit einem Pausen-Referenzsignal kein Korrekturwert addiert wird.

8. Anordnung zum Durchführen des Verfahrens nach einem der vorhergehenden Ansprüche, mit
Mitteln zum Aufnehmen eines akustischen Sprachsignals und zum Erzeugen einer Folge von Testsignalen daraus,
Mitteln zum Speichern von Folgen von Referenzsignalen, die Wörtern eines Vokabulars entsprechen,
Mitteln zum Speichern von Sprachmodellwerten,
ersten Mitteln zum Vergleichen der Folge von Testsignalen mit Folgen von Referenzsignalen und zum Erzeugen von Bewertungswerten und Gesamt-Bewertungswerten,
zweiten Mitteln zum Vergleichen der Bewertungswerte mit einem Schwellenwert und zum Steuern der ersten Mittel zum Vergleichen,
Mitteln, die wenigstens von den ersten Mitteln zum Vergleichen gesteuert sind, zum Abgeben wenigstens einer Folge von Wörtern,
gekennzeichnet durch Mittel zum Liefern von Korrekturwerten an die ersten Mittel zum Vergleichen.

## Claims

1. A method of recognizing a sequence of words of a given vocabulary from a speech signal, including the following steps:
sampling the speech signal at recurrent instants in order to produce a series of test signals;
executing a signal-by-signal comparison between the test signals and various series of reference signals, thus producing scores, each series of reference signals forming part of a predetermined set of series of reference signals and representing a word of the vocabulary, the set of series of reference signals constituting a tree which has a root and in which each tree branch includes a number of reference signals and is associated with a speech element, vocabulary words being associated with given branch nodes and branch ends;
deriving, for each terminated word, a word result which contains an overall score, the comparison producing scores being continued, starting with a new score corresponding to the overall score of the terminated word as the predecessor word, for subsequent test signals with the start of series of reference signals for as long as the score is smaller than a predetermined threshold value, the overall score of the terminated word being derived from the score at the end of this word and a language model value which is associated with a combination of the terminated word and a sequence of predetermined length of terminated predecessor words;
recognizing at least one sequence of words on the basis of the overall scores, characterized in that upon continuation of the comparisons after a word end the score for at least the tree root is increased by a correction value and that, whenever a word end is reached, this correction value is subtracted from the score at the relevant word end and the language model value is added so as to produce the overall score.

2. A method as claimed in Claim 1, characterized in that for at least some of the tree nodes succeeding the tree root the instantaneous score is increased by a correction value associated with the relevant tree node, and that, when a word end is reached, the sum of the correction values of all tree nodes passed so as to reach the relevant word end is subtracted and the language model value is added so as to produce the overall score.

3. A method as claimed in Claim 2, characterized in that the sum of the correction values of all tree nodes between the tree root and each word end does not exceed the language model value for the relevant word.

4. A method as claimed in Claim 2 or 3, characterized in that the correction value, or each correction value, is derived from the minimum value of the language model values occurring for all words succeeding the relevant tree node.

5. A method as claimed in Claim 2 or 3, characterized in that the correction values associated with the tree nodes are fixed, predetermined values which are preferably determined, for each tree node, from the words succeeding the relevant tree node and, in the case of an n-gram language model with n > 1, from the optimum predecessor words in conformity with the language model used.

6. A method as claimed in Claim 2 or 3, characterized in that the correction values at tree nodes are determined only for given, predetermined words of the vocabulary in dependence on these words, and that predetermined correction values which are permanently associated with the tree nodes are used for all other words of the vocabulary.

7. A method as claimed in any one of the preceding Claims, in which the set of series of reference signals comprises at least one interval reference signal associated with a speech interval, characterized in that after a word end no correction value is added upon comparison of a test signal with an interval reference signal.

8. A device for carrying out the method claimed in one of the preceding Claims, which includes:
means for picking up an acoustic speech signal and for generating a series of test signals therefrom,
means for storing series of reference signals which correspond to words of a vocabulary;
means for storing language model values;
first means for comparing the series of test signals with series of reference signals and for producing scores and overall scores;
second means for comparing the scores with a threshold value and for controlling the first means for comparison,
means which are controlled at least by the first means for comparison in order to output at least one sequence of words, characterized in that it includes means for delivering correction values to the first means for comparison.

## Revendications

1. Procédé de détermination d'une séquence de mots d'un vocabulaire préalablement déterminé à partir d'un signal de parole comportant les étapes suivantes :
- à des moments répétés, le signal de parole est balayé pour produire une séquence de signaux de test ;
- une comparaison par signal entre les signaux de test et les différentes séquences de signaux de référence avec production de valeurs d'évaluation est effectuée, chaque séquence de signaux de référence appartenant à un jeu préalablement déterminé de séquences de signaux de référence et représentant un mot de vocabulaire et le jeu de séquences de signaux de référence formant un arbre avec une racine, chaque branche d'arbre présentant plusieurs signaux de référence et étant affectée à un élément de parole et les mots de vocabulaire étant affectés à certains noeuds de branche et extrémités de branche ;
- pour chaque mot terminé est dérivé un résultat de mot qui comprend une valeur d'évaluation globale et la comparaison avec production de valeurs d'évaluation est poursuivie en commençant par une nouvelle valeur d'évaluation correspondant à la valeur d'évaluation globale du mot terminé comme mot précédent pour les signaux de test suivants par le début de séquences de signaux de référence tant que la valeur d'évaluation est inférieure à une valeur seuil préalablement déterminée, la valeur d'évaluation globale du mot terminé étant dérivée de la valeur d'évaluation à la fin de ce mot et d'une valeur de modèle de parole qui est affectée à une combinaison du mot terminé et d'une séquence de longueur préalablement déterminée des mots précédents terminés ;- au moins une séquence de mots est déterminée sur la base des valeurs d'évaluation globales,
caractérisé en ce qu'en cas de poursuite des comparaisons après une fin de mot, la valeur d'évaluation est majorée d'une valeur de correction du moins à la racine de l'arbre et, lorsque chaque fin de mot est atteinte, cette valeur de correction est soustraite de la valeur d'évaluation à cette fin de mot et la valeur du modèle de parole est additionnée pour obtenir la valeur d'évaluation globale.

2. Procédé selon la revendication 1,
caractérisé en ce que, pour au moins quelques-uns des noeuds d'arbre suivant la racine de l'arbre, la valeur d'évaluation instantanée est majorée d'une valeur de correction affectée à ce noeud d'arbre et, lorsqu'une fin de mot est atteinte, la somme des valeurs de correction de tous les noeuds d'arbre parcourus jusqu'à la fin de mot correspondante est soustraite et la valeur du modèle de parole est additionnée pour obtenir la valeur d'évaluation globale.

3. Procédé selon la revendication 2,
caractérisé en ce
que la somme des valeurs de correction de tous les noeuds d'arbre entre la racine de l'arbre et chaque fin de mot ne dépasse pas la valeur du modèle de parole pour ce mot.

4. Procédé selon l'une des revendications 2 ou 3,
caractérisé en ce que la ou chaque valeur de correction est dérivée du minimum des valeurs de modèle de parole qui résultent de tous les mots suivant le noeud d'arbre correspondant.

5. Procédé selon l'une des revendications 2 ou 3,
caractérisé en ce que les valeurs de correction affectées au noeud d'arbre sont des valeurs préalablement déterminées qui sont de préférence déterminées pour chaque noeud d'arbre à partir du mot suivant ce noeud d'arbre et, pour un modèle de parole n-gramme avec n>1, à partir des mots précédents optimaux en fonction du modèle de parole utilisé.

6. Procédé selon l'une des revendications 2 ou 3,
caractérisé en ce que les valeurs de correction sur les noeuds d'arbre ne sont déterminées que pour certains mots du vocabulaire préalablement définis en fonction de ces mots et des valeurs de correction affectées aux noeuds d'arbre préalablement déterminés pour tous les autres mots du vocabulaire qui sont utilisés.

7. Procédé selon l'une des revendications précédentes, le jeu de séquences de signaux de référence comprenant au moins un signal de référence de pause qui est affecté à une pause de parole,
caractérisé en ce qu'après une fin de mot en cas de comparaison d'un signal de test avec un signal de référence de pause, aucune valeur de correction n'est additionnée.

8. Dispositif d'exécution du procédé selon l'une des revendications précédentes avec des moyens d'enregistrement d'un signal de parole acoustique et de production d'une séquence de signaux de test à partir de là,
des moyens d'enregistrement de séquences de signaux de référence qui correspondent à des mots d'un vocabulaire,
des moyens d'enregistrement de valeurs de modèle de parole,
des premiers moyens en vue de la comparaison de la séquence de signaux de test avec des séquences de signaux de référence et en vue de la production de valeurs d'évaluation et de valeurs d'évaluation globales,
des deuxièmes moyens en vue de la comparaison des valeurs d'évaluation avec une valeur seuil et en vue de la commande des premiers moyens à des fins de comparaison,
des moyens qui sont commandés au moins par les premiers moyens de comparaison, en vue de délivrer au moins une séquence de mots, est caractérisé par des moyens en vue de délivrer des valeurs de correction aux premiers moyens de comparaison,
caractérisé par des moyens de délivrance de valeurs de correction sur ces premiers moyens à des fins de comparaison.
